Europäisches Patentamt

European Patent Office

Office européen des brevets

(19)

(11) **EP 1 391 421 A1**

(12) **EUROPEAN PATENT APPLICATION**
published in accordance with Art. 158(3) EPC

(43) Date of publication:
**25.02.2004 Bulletin 2004/09**

(51) Int Cl.$^7$: **C01B 3/32**, C01B 3/34

(21) Application number: **02769575.8**

(22) Date of filing: **13.05.2002**

(86) International application number:
**PCT/JP2002/004605**

(87) International publication number:
**WO 2002/092499 (21.11.2002 Gazette 2002/47)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **15.05.2001 JP 2001144652**

(71) Applicant: **Sekine, Yasushi**
**Nakano-ku, Tokyo 165-0033 (JP)**

(72) Inventors:
• **SEKINE, Yasushi**
 **Nerima-ku, Tokyo 179-0074 (JP)**
• **WATANABE, Masato**
 **Setagaya-ku, Tokyo 156-0043 (JP)**

(74) Representative: **Eddowes, Simon et al**
**Urquhart-Dykes & Lord,**
**30 Welbeck Street**
**London W1G 8ER (GB)**

(54) **METHOD AND APPARATUS FOR LIQUID PHASE REFORMING OF HYDROCARBON OR OXYGEN-CONTAINING COMPOUND**

(57) There has been conventionally known a method for producing hydrogen and oxygen through reactions of hydrocarbon and vapor (steam reforming method). This steam reforming method has been so far practiced at a high temperature of 600°C to 850°C and high pressure of 5 to 100 atmospheres by using nickel catalyst including alumina as a carrier.

However, it is disadvantageously necessary for the aforenoted prior art method for carrying out the reaction at the high temperature and high pressure to use a sturdy reaction apparatus which can endure the high temperature and high pressure. Furthermore, implementation of the high temperature and high pressure required for the prior art method inevitably turns out to be expensive. Besides, the prior art method is relatively low in the rate of selecting carbon monoxide (e.g. percentage of components, which turns to carbon atom in carbon monoxide, in the carbon atom forming the carbon monoxide as raw materials), and causes various sorts of secondary reactions, consequently to possibly block a reaction tube due to by-product materials resultantly produced or deteriorate the catalyst.

In the light of the foregoing, the present invention has an object to provide a novel liquid-phase reforming method and apparatus for hydrocarbon and oxygen-containing compound, which can be practiced at a temperature lower than that at which the conventional method is practiced and at normal pressures without using catalyst in high rate of selecting carbon monoxide, has no need of separating products from the unreacted substances, and does not give rise to any by-product.

To attain the object described above according to the present invention, there is provided a reforming method characterized by reacting hydrocarbon or oxygen-containing compound and water by pulse discharge in the liquid including the hydrocarbon or oxygen-containing compound, thus to produce hydrogen and carbon monoxide. According to this method of the invention, the objective hydrogen and carbon monoxide can be obtained by pulse discharge in the liquid. Besides, the intended reaction can be carried out at normal temperatures and pressures. Since the product can be obtained in the form of gas, there is no necessity for separating the product resultantly obtained from the unreacted substances. Furthermore, the by-product such as acetylene is dissolved and absorbed in the liquid and reacted over again, consequently to be converted into synthesis gas.

Fig. 1

**Description**

TECHNICAL FIELD

This invention relates to a method and apparatus for liquid-phase reforming (property modification) of hydrocarbon and oxygen-containing compound.

BACKGROUND ART

There has been so far known a method for producing hydrogen and carbon monoxide through the reaction of hydrocarbon with steam (steam reforming method). The so-called steam reforming is generally described by the following chemical equation:

$$C_mH_n + mH_2O \rightarrow mCO + (m+n/2)H_2$$

Mixed gas of hydrogen and carbon monoxide, which is obtained by the steam reforming (called "synthesis gas") is important industrial raw material serving as key components of a category so called "C1 chemistry" and used as synthetic raw material and used as synthetic raw material for syntheses of methanol, ammonia and dimethyl ether and also as raw material for Fischer-Tropsch reaction for producing gasoline or the like.

In general, the steam reforming is fulfilled at a high temperature of 600°C to 840°C at a high pressure of about 5 to 100 atm by using alumina as a carrier and a nickel catalyst. This method, which is practiced at a high temperature and high pressure, disadvantageously requires a sturdy reaction apparatus capable of standing up to high pressure and heat and costs a great deal to produce the high temperature and high pressure. Furthermore, this conventional method has disadvantages of being a relatively low selectivity for carbon monoxide (i.e. rate of substance to cause carbon atoms of the raw material of the objective hydrocarbon in the carbon monoxide), and causing various side adverse reactions to block up a reaction tube due to resultantly produced by-product materials and deteriorate the catalyst.

After earnest study made in the existing situations described above, the inventors of this invention devised a novel steam reforming method capable of being practiced at normal pressures at a lower temperature than that in the conventional reforming method without using any catalyst, which is highly selective for carbon monoxide and never cause miscellaneous reactions and has filed a patent application for the steam reforming method (Japanese Patent Application No. 2001-152432). The steam reforming method makes it possible to produce hydrogen and carbon monoxide by reacting chain hydrocarbon with steam by direct-current pulse discharge in mixed gas containing gaseous chain hydrocarbon and steam. This proposed method can be made small and practiced at a remarkably low cost by using a portable reactor. Thus, there can be expected a system capable of transporting natural gas to supply the fuel upon being reformed to automobiles or other motor vehicles instead of methanol and gasoline as hydrogen for a fuel cell.

However, the method proposed in the aforementioned patent application necessitates processes of separating the objective products from unreacted matter and raising the temperature of heating to at least a temperature of producing steam, though it is a far lower temperature than that at which the conventional method using a catalyst is effected. Thus, there has been felt the need of a manageable method capable of causing a reaction at a low temperature close to room temperature. Moreover, the aforenoted method inevitably produces some amount of by-products, which are desired to be more decreased.

In the light of the foregoing, the present invention seeks to provide a novel reforming method and apparatus capable of be practiced at normal temperatures and normal pressures without separating objective products from unreacted matter and perfectly preventing production of by-products such as acetylene.

DISCLOSURE OF THE INVENTION

To attain the object described above according to the present invention, there is provided a liquid-phase reforming method for producing hydrogen and carbon monoxide, which is characterized by reacting hydrocarbon or oxygen-containing compound with water by pulse discharge in a fluid containing the hydrocarbon or oxygen-containing compound and water.

BRIEF DESCRIPTION OF THE DRAWINGS

FIG. 1 is a diagram showing a reaction apparatus according to the present invention.
FIG. 2 is a diagram showing the reaction apparatus according to the present invention.
FIG. 3 is a diagram showing the reaction apparatus according to the present invention.
FIG. 4 is a diagram showing the reaction apparatus according to the present invention.
FIG. 5 is a diagram showing the reaction apparatus according to the present invention.

BEST MODE FOR CARRYING OUT THE INVENTION

The present invention relates to a liquid-phase reforming method for producing hydrogen and carbon monoxide, in which hydrocarbon or oxygen-containing compound is reacted with water by pulse discharge in a fluid containing the hydrocarbon or oxygen-oontaining compound and water.

According to the method described above, the objective hydrogen and carbon monoxide can be produced by the pulse discharge. Since the product can be obtained in the form of a gas, it has no need to be separated from unreacted matter. Besides, by-products such as acetylene dissolve in the fluid and is again reacted, resultantly to be converted to synthesis gas. The "fluid containing the hydrocarbon or oxygen-containing compound and water" includes components of hydrocarbon and water, oxygen-containing compound and water, and hydrocarbon, water, oxygen-containing compound and water, and also includes a combination of the aforesaid components and other materials.

The present invention has another feature in that pulse discharge is effected across a phase boundary formed between the hydrocarbon or oxygen-containing compound and water in the aforementioned liquid-phase reforming method.

According to this feature of the invention, the reaction of the hydrocarbon or oxygen-containing compound with water is proceeded along the phase boundary, thereby to produce the intended hydrogen and carbon monoxide from the phase boundary.

The present invention has still another feature in that pulse discharge is effected in a mixed fluid of hydrocarbon or oxygen-containing compound and water in the aforementioned liquid-phase reforming method.

According to this feature of the invention, the reaction is brought about in a region of the pulse discharge, thereby to produce the intended hydrogen and carbon monoxide from the phase boundary.

The present invention has yet another feature in that the hydrocarbon or oxygen-containing compound is one or more selected from aliphatic hydrocarbon, aromatic hydrocarbon, alcohol, ether, aldehyde, ketone, and ester.

According to this feature of the invention, the nature of the raw materials such as the hydrocarbon and oxygen-containing compound can be optimized.

The present invention has further feature in that the subject liquid-phase reforming is effected in the absence of catalyst.

According to this feature of the invention, the reforming can be fulfilled at a low cost.

Further, the present invention provides a liquid-phase reforming apparatus comprising a reactor, electrodes placed within the aforesaid reactor, a direct-current power source for applying direct current to the aforesaid electrodes, and an outlet port for discharging resultantly produced hydrogen and carbon monoxide.

According to the liquid-phase reforming apparatus of the invention, liquid-phase reforming can be carried out. In this apparatus, the raw materials of water, hydrocarbon and oxygen-containing compound in a liquid form are filled in the reactor and undergo an electric discharge effected between the electrodes, consequently to produce and let the objective products out through the outlet port. As a result, the intended products thus obtained can be effectively used.

The liquid-phase reforming apparatus of the invention, in which the aforementioned liquid-phase reforming method is practiced by effecting the pulse discharge across the phase boundary, is characterized by comprising, in addition to the reactor, the electrodes placed within the reactor, the direct-current power source for applying direct current to the aforesaid electrodes, and the outlet port for discharging resultantly produced hydrogen and carbon monoxide, an electrode position controller for controlling the phase boundary so as to be placed between the aforesaid electrodes.

According to this apparatus of the invention, even when the phase boundary tends to be changed in position due to the reaction carried out for a long time or movement of the reactor, the electrodes are controlled to invariably place the phase boundary between the electrodes, consequently to maintain the reaction across the phase boundary.

The present invention will be described hereinafter in detail on the basis of working examples of the invention.

The reforming method according to the present invention generally comprises the processes of reacting hydrocarbon or oxygen-containing compound and water by pulse discharge in the liquid including reacting hydrocarbon or oxygen-containing compound, thus to produce hydrogen and carbon monoxide.

The hydrocarbon in the present invention is not specifically limited in so far as its family containing hydrocarbon and water is in a liquid state, and can be chosen from various types of hydrocarbons. For example, there may be used aliphatic hydrocarbons such as linear, branch or cyclic alkane, alkene and alkyl, various sorts of aromatic hydrocarbons and mixtures of these compounds. To more specific, as the hydrocarbon, petroleum naphtha, gasoline, kerosene, and diesel oil may be used as they are.

The oxygen-containing compound used herein is an organic compound having oxygen atoms contained in the molecules thereof and can be chosen from various types of materials similarly to the aforementioned hydrocarbon. For example, there may be used alcohol such as methanol, ethanol, propanol and butanol, ether such as dimethyl ether, diethyl ether, methyl ethyl ether and methyl tertiary butyl ether, aldehyde such as acetic aldehyde and formic aldehyde, ketone such as methyl ethyl ketone, acetone, and ester such as acetic ether, ethyl formate and dimethyl carbonate.

The water used herein implies liquid excessively containing $H_2O$. As the water, commonly known water may be used, and distilled water, ion-exchange water and so-called "hot water" fall into the concept of the water used in the invention as a matter of course.

On that basis, the present invention is featured by the pulse discharge effected in the liquid containing the aforementioned hydrocarbon or oxygen-containing compound and water. The pulse discharge herein is effected by supplying pulse current between the electrodes, that is, irradiation of electron pulse is repeated at very short time intervals of, for instance, no more than 1 μs. Consequently, the temperature of the liquid phase is not increased to cause the desired reaction at remarkably low temperatures. The pulse discharge is typically effected at regular intervals, but it may of course be intermittently effected.

The pulse power current is usually supplied to give rise to the pulse discharge, but a DC self-excitation pulse discharge for discharging self-excitingly may suitably be used. In this self-excitation pulse discharge, it is desirable to determine the number of pulses discharged (sometimes called "frequency of pulse generation") to about 5 to 1000 per second, preferably, about 50 to 100 per second. The frequency of pulse generation is increased with increasing the electric current at a fixed voltage and decreased with increasing the electrode gap between the electrodes. Therefore, the voltage, current and electrode gap can be adjusted to be automatically determined to their desirable values, thus to fulfill the aforementioned frequency of pulse generation. In a case of using, for example, a compact reaction vessel having an inside diameter of about 4.0 mm, it is preferable to apply voltage of about 0.1 to 6.0 kV, current of about 0.1 to 10 mA, and electrode gap of about 1 to 10 mm to the apparatus of the invention, but these should not be understood as being limited thereto. In case of using a reforming apparatus having higher production capacity, it is better to lengthen the electrode gap and increase the voltage and current to be supplied to fulfill the frequency of the pulse generation as noted above.

The aforementioned pulse discharge brings about reaction, which produces hydrogen and carbon monoxide. It is thought that irradiation of the discharge current, i.e. electron rays, to molecules gives rise to a radical, which induces the reaction. There is concurrently caused a secondary reaction in which hydrocarbon is decomposed into water and a C2 compound containing acetylene as a principal component. However, by-products such as acetylene are absorbable into water and hydrocarbon and oxygen-containing compound, which are used as raw materials in the invention, thus to eliminate the need for separating the by-products from the gas resultantly produced. Incidentally, the by products such as acetylene absorbed are again reacted by the pulse discharge, consequently to be converted to synthesis gas.

The present invention has further characteristic feature in that the reaction by the pulse discharge as noted above can be carried out without catalyst in the invention. Although the present invention can therefore eliminate a drawback involved in practicing the conventional reforming method using catalyst, thus having industrial benefits, it may freely take advantage of the catalyst used in the conventional method in order for elevating the reaction efficiency. Just as one example, metal powder catalyst may be dispersed into fluid containing hydrocarbon and oxygen-containing compound while effecting the pulse discharge.

In a case that the compositions of the produced synthesis gas are rich in hydrogen, the hydrogen produced by the secondary reaction, which has high industrial usefulness, may be included in the synthesis gas for use in industrials. Besides, the produced synthesis gas can be practically used in industrials without otherwise being refined.

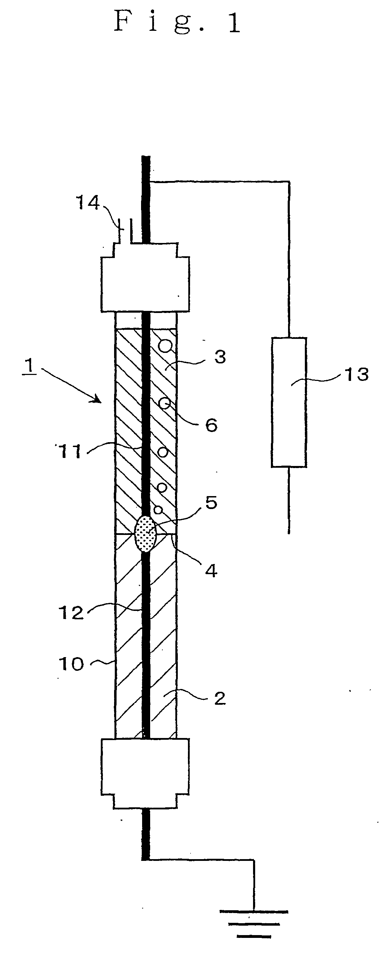

FIG. 1 illustrates one embodiment of the reaction apparatus for practicing the reforming method according to the present invention. The reaction apparatus 1 shown in FIG. 1 is provided with a reactor 10 formed of a silica tube or a tube of glass, ceramic or the like. In the reactor 10, a pair of electrodes 11 and 12 is placed opposite each other. These electrodes may be made of common material such as SUS, nickel, copper, aluminum, iron and carbon. The electrode is not specifically limited in shape and may be formed in the shape of a needle or a flat plate or any other shape. The electrode 11 is connected to a DC power source 13 such as a negative high voltage power supply and the other electrode 12 is grounded.

On the occasion of inducing the reaction, the reactor 10 is filled with raw materials, i.e. water 2 and hydrocarbon or oxygen-containing compound 3. FIG. 1 shows the state of separating the raw materials in phase, consequently to form a phase boundary 4 by way of example. In this case, the electrodes 11 and 12 are so arranged as to locate the phase boundary 4 between these electrodes. By applying the DC pulse discharge to between the electrodes, there is formed a discharge region 5 between the electrodes to concurrently induce the reaction across the phase boundary 4, consequently producing the intended hydrogen and carbon monoxide 6. The hydrogen and carbon monoxide 6 thus produced is fed out through the outlet port 16 formed in the reactor for various uses and applications.

In the apparatus shown in FIG. 1, the electrodes 11 and 12 are arranged so as to locate the phase boundary 4 approximately in the middle of the electrodes, but the they may be arranged so as to locate the phase boundary lopsidedly toward either of the electrodes. As an alternative, the phase boundary may be formed in the longitudinal direction of the electrodes 11 and 12 (the direction of causing the electric discharge). That is, the electrodes may be arranged in any formation inasmuch as the phase boundary 4 is formed between the electrodes.

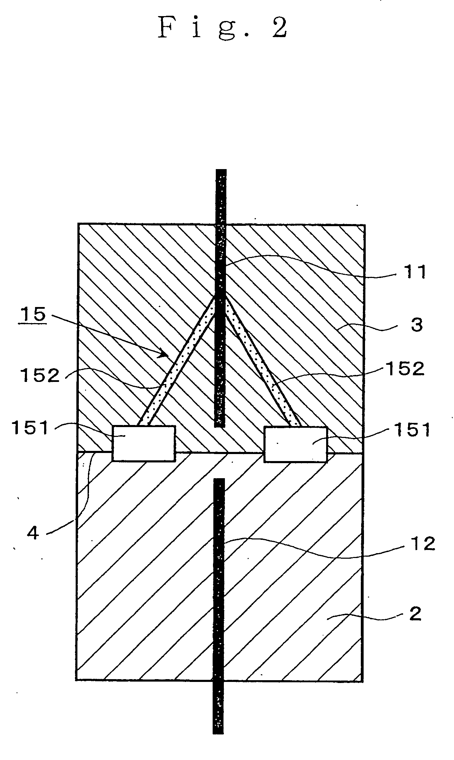

In the event of continuing the reaction for a long time to consume the raw materials or allowing the reaction apparatus 1 to move during the electric discharge caused across the phase boundary 4, the phase boundary 4 may possibly be moved to be displaced from between the electrodes. To eliminate such possibility, there may be disposed an electrode position controller for adjusting the positions of the electrodes following to the displacement of the phase boundary 4. The embodiment having the electrode position controller is illustrated diagrammatically in FIGS. 2 to 4. The apparatus illustrated in FIG. 2 has the electrodes 11 and 12 opposed to each other across the phase boundary 4. The upper electrode 11 is provided with the electrode position controller 15. The electrode position controller 15 comprises float means 151 on the phase boundary 4 and support means 152 for connecting the float means 151 and the electrode 11. This structure allows the float means 151 to move up and down in accordance with the level of the phase boundary 4, thereby to cause the electrode 11 to move along with the float means 151.

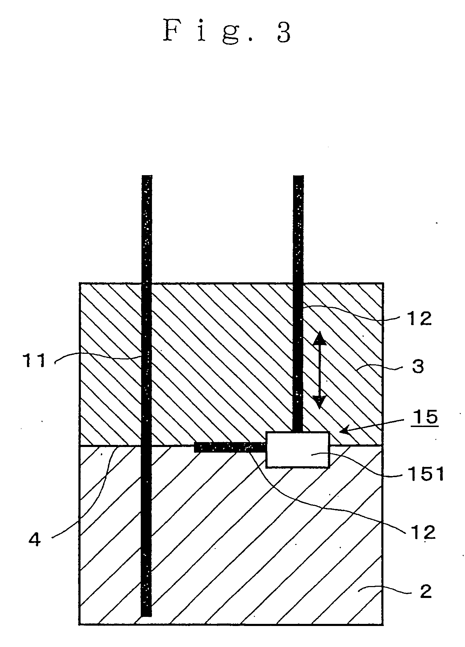

In the embodiment of FIG. 3, the phase boundary 4 is formed in the direction of generating the electric discharge between the electrodes 11 and 12. The electrode 12 is provided with the electrode position controller 15. To be specific, the electrode position controller 15 has the float means 151 integrally connected to the electrode 12, so that the electrode 12 is movable in the longitudinal direction of the electrode 11 while keeping the distance between the electrodes 11 and 12 constant. This embodiment allows the float means 151 to move up and down along with an electrode 112 as the phase boundary 4 varies in level, so that the phase boundary 4 can be constantly formed between the electrodes 11 and 12.

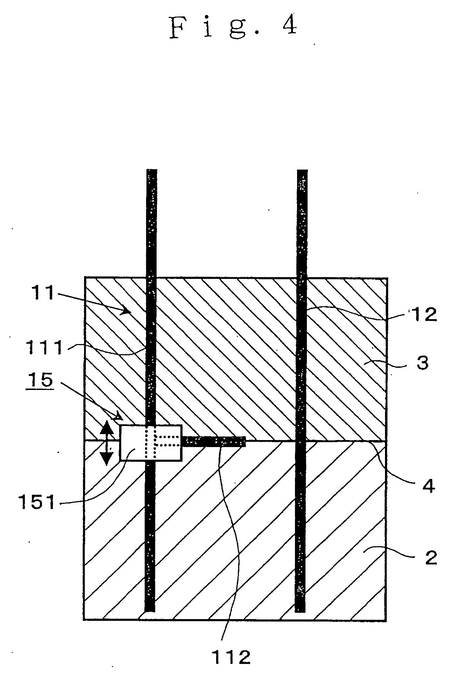

In the embodiment shown in FIG. 4, the electrode 11 comprises electrode elements 111 and 112. The electrode element 112 is secured to the float means 151 mounted on the electrode element 111 movably in the longitudinal direction of the electrode element 111, so that the electrode element 112 can slidably moved in the longitudinal direction of the electrode element 111. This embodiment allows the float means 151 and electrode element 112 to move following to the phase boundary 4, so that the phase boundary 4 can be constantly formed between the electrodes 11 and 12.

The reactor 10 may be provided with a supply port, which is not shown in the accompanying drawings, for arbitrarily supplying the raw materials, so as to successively carry out the intended reaction. It is a matter of course to apply a batch-wise system for this apparatus of the invention.

By otherwise reacting the produced carbon monoxide with steam (water-gas-shift reaction) to produce hydrogen gas and carbon dioxide, the carbon monoxide can be converted into hydrogen for effective use. Thus, the percentage of the hydrogen in the synthesis gas can be further increased.

The reaction apparatus 1 of FIG. 1 has the DC power source 13 connected to the electrodes. This power source should not specifically be limited thereto, and any other power source capable of causing the intended pulse discharge may be substituted therefor. As one example, there may appropriately be used a power source for supplying halfwave or full-wave discharge current by using an AC power source and a rectifier.

The reactor 10 in the apparatus of the invention may have one pair or more of electrodes as occasion demands.

The water 2 and hydrocarbon or oxygen-containing compound 3 in the embodiment of FIG. 1 are different in surface energy to spontaneously cause phase separation, resultantly forming the phase boundary 4. However, the necessary boundary can be formed between the phases in any other ways. For instance, the phase boundary (including a discontinuous surface in concentration) may be formed between the water 2 and hydrocarbon or oxygen-containing compound 3 by using an inorganic molecule sieving membrane having nanopores or subnanopores.

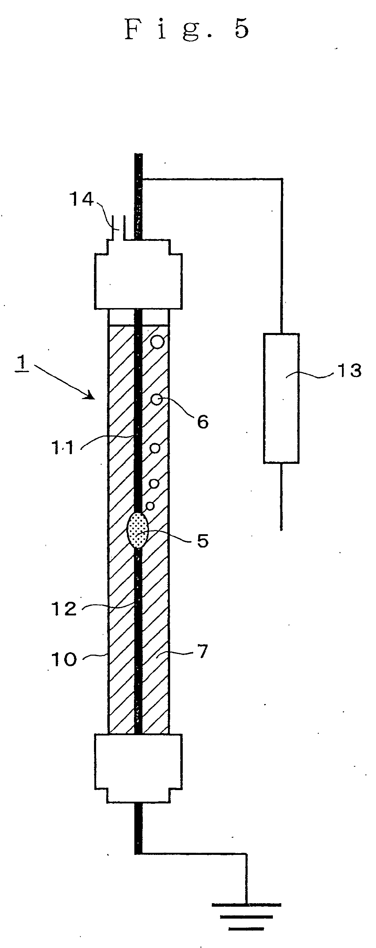

The apparatus shown in FIG. 5 has the reactor 10 filled with a mixture 7 of hydrocarbon or oxygen-containing compound and water, in which the pulse discharge is carried out. The embodiment in which the pulse discharge is carried out in the mixture can also produce hydrogen and carbon monoxide 6 in the same manner as the first embodiment shown in FIG. 1. That is, this embodiment is the same as the embodiment of FIG. 1 except for the manner of carrying out the pulse discharge in the mixture 7.

The aforementioned mixture 7 may be obtained by additive-free mixing such as a mixing of water and ethanol, emulsion mixing using a surface-active agent, or mechanical mixing using mechanical mixing means or the like. In case of the emulsion mixing, there may be used an oil-in-water (o/w) type mixing means or a water-in-oil (w/o) type mixing means.

The reforming apparatus of the invention can produce lean synthesis gas rich in hydrogen at normal temperatures and normal pressure, thus contributing to manufacture a portable hydrogen producing device. This portable hydrogen producing device may possibly be equipped on vehicles as a hydrogen supplying unit for a fuel cell.

The embodiments of the present invention will be specifically described hereinafter, but this invention should not be limited to the following embodiments.

(Working Example 1)

The apparatus shown in FIG. 1 was produced as a reaction apparatus of the invention. The reactor for being filled with the raw materials according to the invention was made of a silica tube of 10 mm in outer diameter, 9 mm in inner diameter and 200 mm in length. The electrodes opposed to each other in the reactor were made of SUS316. Then, the silica tube was filled with water and hexane by a volume ratio of 1:1 These raw materials filled into the silica tube were separated into two layers (upper layer of hexane and lower layer of water) in the reactor. The electrodes were placed opposite to each other across the phase boundary formed by the two layers of the raw materials in the reactor and applied with a fixed electric voltage, thus to cause DC pulse discharge between the electrodes. The reaction was carried out at an ambient temperature (313K). Then, the amount of gas resultantly produced and let out from the outlet port formed in the reactor per minute was measured by use of a gas chromatography. The results of measurements implemented are shown in Table 1. In Table 1, the value on the left of the arrow in "Voltage" denotes "breakdown voltage", and the value on the right of the same denotes "steady-state discharge voltage". The meaning of "water" in "Electrode Position" in Table 1 is the condition in that a sphere occupied by water within between the electrodes is ample (phase boundary biasing towards hexane), the meaning of "hexane" is the condition in that a sphere occupied by hexane within between the electrodes is ample (phase boundary biasing towards water), and the blank column means the condition in that the phase boundary is located approximately in the center of the electrodes.

TABLE 1

| Run No. | Current (mA) | Voltage (kV) | Electrode Gap (mm) | Electrode Position | $H_2$ µmol | CO µmol | $CO_2$ µmol |
|---|---|---|---|---|---|---|---|
| 1 | 4 | -0.6→-0.3 | <0.1 | | 150.1 | 4.8 | 2.1 |
| 2 | 4 | -0.4→-0.3 | <0.1 | | 152.4 | 3.0 | 1.7 |
| 3 | 6 | -7~-6→-0.3 | <0.1 | | 214.8 | 2.5 | 2.0 |
| 4 | 4 | -1.5→-0.7 | ~1 | | 63.7 | 5.2 | 1.5 |
| 5 | 4 | -0.7→-0.5 | <0.1 | | 99.2 | 3.7 | 1.5 |
| 6 | 4 | -1.5~-1.1→-0.4 | 1 | hexane | 113.2 | 2.2 | 1.6 |
| 7 | 4 | -1.5~-1.1→-0.5 | 1 | hexane | 102.6 | 3.0 | 1.2 |
| 8 | 4 | -1.5~-1.1→0.5 | 1 | water | 118.7 | 2.2 | 1.7 |
| 9 | 4 | -1.1~-0.5→-0.6 | 1 | water | 110.7 | 2.0 | 1.7 |
| 10 | 4 | -0.7~-0.4→-0.3 | 1 | water | 162.2 | 1.6 | 2.0 |
| 11 | 4 | -1.2~-0.8→-0.4~-0.5 | 1 | water | 165.8 | 2.1 | 2.5 |
| 12 | 6 | -1→-0.3~-0.4 | 1 | water | 236.8 | 1.4 | 2.0 |
| 13 | 6 | -0.8→-0.3 | 1 | water | 249.5 | 1.4 | 2.2 |
| 14 | 4 | -0.7→-0.1 | 1 | water | 159.4 | 1.4 | 1.7 |
| 15 | 4 | -1.2~-1.→-0.4~-0.5 | 1 | water | 144.3 | 1.1 | 3.8 |
| 16 | 4 | -1.5→-0.6~-0.7 | 1 | hexane | 136.8 | 1.7 | 1.8 |
| 17 | 4 | -1.5~-1.3→-0.7~0.9 | 1 | hexane | 121.8 | 0.8 | 2.2 |

As is apparent from Table 1, it was ascertained that the reaction was taken place by the DC pulse discharge to produce hydrogen and carbon monoxide. The quantity of these products thus obtained was three to ten times as many as a case using a mixture described later. No by-product such as acetylene was detected. Consequently, it was found that the hydrogen and carbon monoxide are invariably produced even when the electrodes are displaced relative to the phase boundary.

(Working Example 2)

This working example was implemented by effecting the DC pulse discharge on the same conditions as those in the Working Example 1 described above except for the raw materials filled into the silica tube, which were made by-mixing water and methanol (volume ratio 1:1). The results of the measurements of gas thus produced are shown in Table 2 below.

TABLE 2

| Run No. | Current (mA) | Voltage (kV) | Electrode Gap (mm) | $H_2$ μmol | CO μmol | $CO_2$ μmol |
|---|---|---|---|---|---|---|
| 1 | 3 | -2.4→-0.4 | 0.1 | 13.4 | 0.8 | 2.7 |
| 2 | 3 | -0.8→-0.3 | 0.1 | 14.8 | 0.7 | 2.9 |
| 3 | 5 | -3.1→-0.3 | 0.1 | 28.7 | 0.7 | 3.6 |
| 4 | 5 | -3.2→-0.3 | 0.1 | 25.2 | 0.7 | 3.4 |
| 5 | 8 | -3.1→-0.4 | 0.1 | 66.9 | 0.3 | 4.8 |
| 6 | 3 | -1.8→-0.6 | 0.5 | 69.7 | 0.6 | 2.6 |
| 7 | 3 | -1.8→-0.7 | 0.5 | 99.6 | 0.7 | 3.1 |
| 8 | 5 | -4.1→-0.8 | 0.5 | 23.6 | 0.9 | 5.0 |
| 9 | 5 | -4.1→-0.6 | 0.5 | 26.2 | 0.8 | 4.4 |

As seen from Table 2, the objective hydrogen and carbon monoxide could be produced by effecting the DC pulse discharge in the mixture. No by-product such as acetylene could be detected.

(Working Example 3)

This working example was implemented by effecting the DC pulse discharge on the same conditions as those in the Working Example 1 described above except for the raw materials filled into the silica tube, which were made by mixing water and ethanol (volume ratio 1:1 or 1:2). The results of the measurements of gas thus produced are shown in Table 3 below.

TABLE 3

| Run No. | Current (mA) | Voltage (kV) | Electrode Gap | $H_2$ μmol | CO μmol | $CO_2$ μmol | Volume Ratio $C_2H_5OH/H_2O$ |
|---|---|---|---|---|---|---|---|
| 1 | 3 | -2.4→-0.4 | 0.1 | 20.4 | 0.8 | 1.6 | 1/1 |
| 2 | 3 | -0.8→-0.3 | 0.1 | 25.7 | 0.5 | 1.4 | 1/1 |
| 3 | 5 | -3.1→-0.3 | 0.1 | 69.7 | 0.5 | 2.5 | 1/1 |
| 4 | 5 | -3.2→-0.3 | 0.1 | 62.9 | 0.4 | 1.8 | 1/1 |
| 5 | 3 | -3.1→-0.4 | 0.1 | 27.2 | 0.4 | 1.9 | 1/2 |
| 6 | 3 | -1.8→-0.6 | 0.1 | 27.5 | 0.3 | 1.8 | 1/2 |
| 7 | 5 | -1.8→-0.7 | 0.1 | 63.7 | 0.4 | 2.4 | 1/2 |
| 8 | 5 | -4.1→-0.8 | 0.1 | 64.2 | 0.4 | 1.5 | 1/2 |

As seen from Table 3, the objective hydrogen and carbon monoxide could be produced by effecting the DC pulse discharge even when using water and ethanol as the raw materials, similarly to the aforementioned Working Example 2. No by-product such as acetylene could be detected.

INDUSTRIALAPPLICABILTTY

As is apparent from the foregoing description, the reforming method according to the present invention can advantageously be practiced at normal temperatures and normal pressures by performing the pulse discharge in a fluid containing the hydrocarbon or oxygen-containing compound and water with a remarkably small charge of electricity. Since the objective products can be obtained in the form of gas, there is no necessary for separating the products from unreacted matters. The by products such as acetylene are absorbed into water and hydrocarbon or oxygen-containing component, consequently to produce purer products.

## Claims

**1.** A liquid-phase reforming method for producing hydrogen and carbon monoxide, **characterized by** reacting hydrocarbon or oxygen-containing compound with water by pulse discharge in a fluid containing said hydrocarbon or oxygen-containing compound and water.

**2.** The liquid-phase reforming method set forth in claim 1, **characterized in that** said pulse discharge is effected across a phase boundary formed between said hydrocarbon or oxygen-containing compound and water.

**3.** The liquid-phase reforming method set forth in claim 1, **characterized in that** said pulse discharge is effected in a mixed fluid of hydrocarbon or oxygen-containing compound and water.

**4.** The liquid-phase reforming method set forth in any of claims 1 to 3, **characterized in that** said hydrocarbon or oxygen-containing compound is one or more selected from aliphatic hydrocarbon, aromatic hydrocarbon, alcohol, ether, aldehyde, ketone, and ester.

**5.** The liquid-phase reforming method set forth in any of claims 1 to 3, **characterized in that** liquid-phase reforming is effected in the absence of catalyst.

**6.** The liquid-phase reforming method set forth in claim 4, **characterized in that** liquid-phase reforming is effected in the absence of catalyst.

**7.** The liquid phase reforming method set forth in any of claims 1 to 3, **characterized in that** liquid-phase reforming is effected in combination with catalyst.

**8.** The liquid-phase reforming method set forth in claim 4, **characterized in that** liquid-phase reforming is effected in combination with catalyst.

**9.** The liquid-phase reforming method set forth in any of claims 1 to 3, **characterized in that** said produced carbon monoxide is further reacted with steam, thereby to obtain hydrogen.

**10.** The liquid-phase reforming method set forth in claim 4, **characterized in that** said produced carbon monoxide is further reacted with steam, thereby to obtain hydrogen.

**11.** The liquid-phase reforming method set forth in claim 5, **characterized in that** said produced carbon monoxide is further reacted with steam, thereby to obtain hydrogen.

**12.** The liquid-phase reforming method set forth in claim 6, **characterized in that** said produced carbon monoxide is further reacted with steam, thereby to obtain hydrogen.

**13.** The liquid-phase reforming method set forth in claim 7, **characterized in that** said produced carbon monoxide is further reacted with steam, thereby to obtain hydrogen.

**13.** The liquid-phase reforming method set forth in claim 8, **characterized in that** said produced carbon monoxide is further reacted with steam, thereby to obtain hydrogen.

**14.** A liquid-phase reforming apparatus for fulfilling said liquid-phase reforming method set forth in any of claims 1 to 3, **characterized by** comprising a reactor, electrodes placed within said reactor, a direct-current power source for applying direct current to said electrodes, and an outlet port for discharging resultantly produced hydrogen and carbon monoxide.

**15.** A liquid-phase reforming apparatus for fulfilling said liquid-phase reforming method set forth in claim 4, **characterized by** comprising a reactor, electrodes placed within said reactor, a direct-current power source for applying direct current to said electrodes, and an outlet port for discharging resultantly produced hydrogen and carbon monoxide.

**16.** A liquid-phase reforming apparatus for fulfilling said liquid-phase reforming method set forth in claim 5, **characterized by** comprising a reactor, electrodes placed within said reactor, a direct-current power source for applying direct current to said electrodes, and an outlet port for discharging resultantly produced hydrogen and carbon monoxide.

**17.** A liquid-phase reforming apparatus for fulfilling said liquid-phase reforming method set forth in claim 6, **characterized by** comprising a reactor, electrodes placed within said reactor, a direct-current power source for applying direct current to said electrodes, and an outlet port for discharging resultantly produced hydrogen and carbon monoxide.

**18.** A liquid-phase reforming apparatus for fulfilling said liquid-phase reforming method set forth in claim 2, **characterized by** comprising a reactor, electrodes placed within said reactor, a direct-current power source for applying direct current to said electrodes, an outlet port for discharging resultantly produced hydrogen and carbon monoxide, and an electrode position controller for controlling said phase boundary so as to be placed between said electrodes.

Fig. 1

Ｆｉｇ．２

Fig. 3

# F i g . 4

# Fig. 5

## INTERNATIONAL SEARCH REPORT

| International application No. |
| --- |
| PCT/JP02/04605 |

**A. CLASSIFICATION OF SUBJECT MATTER**
Int.Cl$^7$ C01B3/32, 3/34

According to International Patent Classification (IPC) or to both national classification and IPC

**B. FIELDS SEARCHED**

Minimum documentation searched (classification system followed by classification symbols)
Int.Cl$^7$ C01B3/22-3/48, B01J19/00-19/32

Documentation searched other than minimum documentation to the extent that such documents are included in the fields searched
| | | | |
| --- | --- | --- | --- |
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
| --- | --- | --- |
| E,A | JP 2001-335302 A (Yasushi SEKINE), 04 December, 2001 (04.12.01), Abstract; Claims (Family: none) | 1-18 |
| E,A | JP 2001-167784 A (Mitsubishi Motors Corp.), 22 June, 2001 (22.06.01), Abstract; Claims (Family: none) | 1-18 |
| A | JP 01-098132 U (NEC Corp.), 30 June, 1989 (30.06.89), Claims (Family: none) | 1-18 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 29 May, 2002 (29.05.02) | 11 June, 2002 (11.06.02) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

## INTERNATIONAL SEARCH REPORT

International application No.

PCT/JP02/04605

C (Continuation).   DOCUMENTS CONSIDERED TO BE RELEVANT

| Category* | Citation of document, with indication, where appropriate, of the relevant passages | Relevant to claim No. |
|---|---|---|
| A | JP 53-044915 B2  (Director General, Agency of Industrial Science), 02 December, 1978 (02.12.78), Claims (Family: none) | 1-18 |
| A | JP 42-013441 B1  (Iwatani & Co., Ltd.), 31 July, 1967 (31.07.67), Claims (Family: none) | 1-18 |
| A | JP 16-2319 B1  (Tomizo AMEMIYA), 20 May, 1941 (20.05.41), Claims (Family: none) | 1-18 |

Form PCT/ISA/210 (continuation of second sheet) (July 1998)